# EUROPÄISCHE PATENTSCHRIFT

(11) **EP 1 252 492 B1**
(45) Veröffentlichungstag und Bekanntmachung des Hinweises auf die Patenterteilung: **02.06.2010**
(21) Anmeldenummer: 01909550.4
(22) Anmeldetag: 31.01.2001
(51) Int. Cl.: G01L 19/06

(54) **DRUCKSENSOR ZUM ERFASSEN DES DRUCKES EINER FLÜSSIGKEIT**
PRESSURE SENSOR FOR DETECTING THE PRESSURE OF A LIQUID
DETECTEUR DE PRESSION SERVANT A DETECTER LA PRESSION D'UN LIQUIDE

(30) Priorität: 03.02.2000 DE 10004614
(43) Veröffentlichungstag der Anmeldung: 30.10.2002
(73) Patentinhaber: Johnson Matthey Catalysts (Germany) GmbH., 96257 Redwitz (DE)
(72) Erfinder: WEIGL, Manfred, 93161 Viehhausen (DE)
(74) Vertreter: Tergau & Pohl Patentanwälte
(86) Internationale Anmeldenummer: PCT/DE2001/000376
(87) Internationale Veröffentlichungsnummer: WO 2001/057488

(56) Entgegenhaltungen:
- EP-A- 0 303 979
- DE-A- 2 040 786
- GB-A- 2 264 361

## Beschreibung

Die Erfindung betrifft einen Drucksensor zum Erfassen des Druckes einer Flüssigkeit, insbesondere einer Reduktionsmittellösung für die Abgasnachbehandlung bei einer Brennkraftmaschine.

Drucksensoren zum Messen des Druckes eines Fluids sind z.B. aus der DE 20 40 786 und der GB 2 264 361 A bekannt.

Die Verminderung der Stickoxidemission einer mit Luftüberschuss arbeitenden Brennkraftmaschine, insbesondere einer Diesel-Brennkraftmaschine kann mit Hilfe des SCR-Verfahrens (selektive katalytische Reduktion) zu Luftstickstoff (N2) und Wasserdampf (H20) erfolgen. Als Reduktionsmittel werden entweder gasförmiges Ammoniak (NH3), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DENOX-Katalysator die Stickoxide reduziert.

Ein solches Dosiersystem weist als wesentliche Komponenten einen Reduktionsmittelbehälter, eine Pumpe, einen Druckregler, einen Drucksensor, ein Dosierventil und die nötigen Verbindungsschläuche auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuereinrichtung derart angesteuert, dass abhängig von Betriebsparametern der Brennkraftmaschine eine bestimmte, aktuell nötige Menge an Reduktionsmittel zugeführt wird (DE 197 43 337 Cl).

Es ist ein Vorteil der in wässerigen Lösungen vorliegenden Ammoniak freisetzenden Substanzen, wie z.B. Harnstoff, dass die Bevorratung, die Handhabung, die Förder- und Dosierbarkeit technisch relativ einfach zu lösen sind. Ein Nachteil dieser wässerigen Lösungen besteht darin, dass in Abhängigkeit der Konzentration der gelösten Substanz die Gefahr des Einfrierens bei bestimmten Temperaturen besteht.

32%ige Harnstofflösung, wie sie typischerweise in SCR-Systemen als Reduktionsmittel verwendet wird, weist einen Gefrierpunkt von -11° C auf. Dabei erhöht sich das Volumen ähnlich wie bei Wasser um ca. 10%. Diese Volumenzunahme wird hauptsächlich vom elastischen Reduktionsmittelschlauch kompensiert, d.h. durch die Elastizität des Systems wird der Druckanstieg begrenzt. Alle Komponenten des Systems welche Reduktionsmittel enthalten, müssen so konstruiert sein, dass bis zum vollständigen Einfrieren ein Druckabbau in Richtung Schlauch möglich ist. Dies erfordert eine hohe Überdruckfestigkeit und kleine Totvolumina der Komponenten. Beim Drucksensor ist die Druckfestigkeit prinzipiell durch die Drucksensormembran begrenzt. Je weiter der Berstdruck der Drucksensormembran über der oberen Messgrenze des Drucksensors liegt, umso niedriger ist die Sensorempfindlichkeit und damit die Messwertauflösung und Genauigkeit. Die Frostbeständigkeit ist beim Drucksensor also prinzipbedingt am schwierigsten zu erreichen.

Die Volumenzunahme von Wasser oder wie hier von wässeriger Reduktionsmittellösung beim Phasenübergang von flüssig nach fest ist unvermeidlich. Selbst unter Einsatz von Überdruckventilen oder elastischen Schlauchverbindungen lässt sich dabei nicht immer ein unkontrollierter Druckanstieg in bestimmten Systemabschnitten vermeiden, da gerade durch das Einfrieren ein hydrostatischer Druckausgleich weitgehend verhindert wird.

Der Erfindung liegt die Aufgabe zugrunde, einen Drucksensor der eingangs genannten Art derart auszugestalten, dass bei Einfrieren der Flüssigkeit eine Beschädigung des Drucksensors, insbesondere der Drucksensormembran vermieden werden kann.

Diese Aufgabe wird durch die Merkmale des Patentanspruches 1 gelöst.

Die der Erfindung zugrundeliegende Idee beruht darin, das unvermeidliche Totvolumen unmittelbar vor dem Drucksensorelement so klein wie möglich zu gestalten und darüber hinaus sicherzustellen, dass sich dieses Totvolumen bei aufgrund des Phasenüberganges der Flüssigkeit auftretenden Überdruckes definiert elastisch vergrößert und somit den Druck auf die Drucksensormembran begrenzt.

Hierzu wird das eine Drucksensormembran aufweisende Drucksensorelement in einem Aufnahmeteil derart mittels eines Federelementes während des Betriebes innerhalb eines zulässigen Arbeitsdruckbereiches in einer definierten Position gehalten und bei Überschreiten des zulässigen Arbeitsdruckbereiches findet eine gegen die Federkraft wirkende Relativbewegung zwischen Drucksensorelement und Aufnahmeteil statt. Dadurch wird eine Volumenzunahme des unmittelbar vor der Drucksensormembran liegenden Raumes erreicht, wodurch eine Begrenzung des Druckes erzielt wird. Die Drucksensormembran ist somit selbst bei Einfrieren von Reduktionsmittellösung und einhergehend damit durch die Volumenzunahme der gefrorenen Reduktionsmittellösung vor Zerstörung geschützt.

Weitere vorteilhafte Ausgestaltungen der Erfindung werden nachfolgend unter Bezugnahme auf die Zeichnung näher erläutert. Es zeigen:
- Figur 1: eine Blockdarstellung einer Brennkraftmaschine mit zugehöriger Abgasnachbehandlungsanlage, bei der der erfindungsgemäße Drucksensor eingesetzt wird,
- Figur 2: eine schematische Darstellung einer Drucksensormem- bran und
- Figur 3: einen Schnitt durch einen Drucksensor gemäß einem ersten Ausführungsbeispiel und
- Figur 4: einen Schnitt durch einen Drucksensor gemäß einem zweiten Ausführungsbeispiel

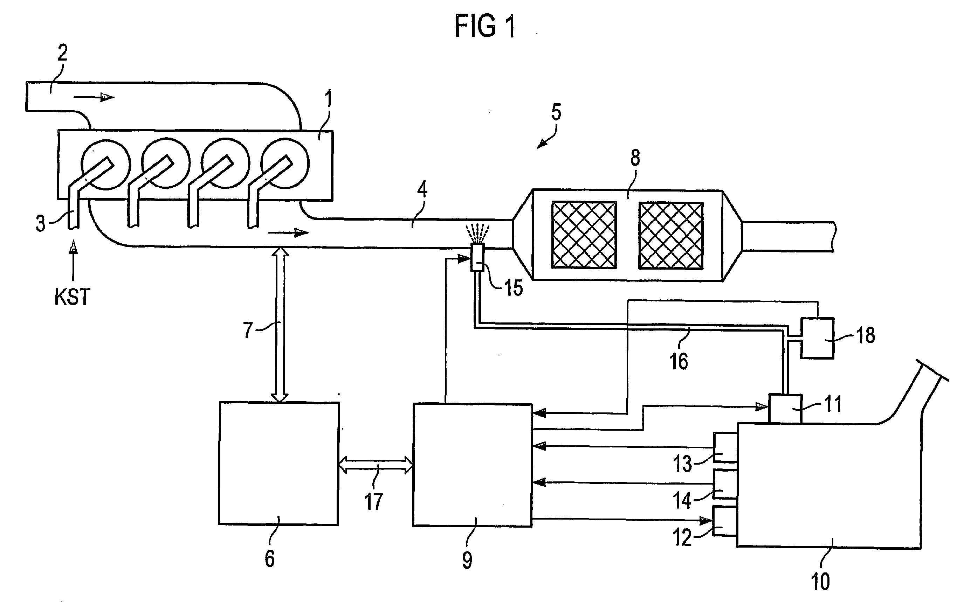

In Figur 1 ist in Form eines Blockschaltbildes sehr vereinfacht eine mit Luftüberschuss betriebene Brennkraftmaschine mit einer ihr zugeordneten Abgasnachbehandlungsanlage gezeigt. Dabei sind nur diejenigen Teile dargestellt, die für das Verständnis der Erfindung notwendig sind. Insbesondere ist auf die Darstellung des Kraftstoffkreislaufes verzichtet worden. In diesem Ausführungsbeispiel ist als Brennkraftmaschine eine Dieselbrennkraftmaschine gezeigt und als Reduktionsmittel zum Nachbehandeln des Abgases wird wässerige Harnstofflösung verwendet.

Der Brennkraftmaschine 1 wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine 1 einspritzen, ist mit dem Bezugszeichen 3 bezeichnet. Das Abgas der Brennkraftmaschine 1 strömt über eine Abgasleitung 4 zu einer Abgasnachbehandlungsanlage 5 und von diesem über einen nicht dargestellten Schalldämpfer ins Freie.

Zur Steuerung und Regelung der Brennkraftmaschine 1 ist ein an sich bekanntes Motorsteuergerät 6 über eine hier nur schematisch dargestellte Daten - und Steuerleitung 7 mit der Brennkraftmaschine 1 verbunden. Über diese Daten - und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Abgasnachbehandlungsanlage 5 weist einen Reduktionskatalysator 8 auf, der mehrere in Reihe geschaltete, nicht näher bezeichnete Katalysatoreinheiten beinhaltet. Stromabwärts und/oder stromaufwärts des Reduktionskatalysators 8 kann zusätzlich je ein Oxidationskatalysator angeordnet sein (nicht dargestellt). Ferner ist ein Dosiersteuergerät 9 vorgesehen, das einem Reduktionsmittelvorratsbehälter 10 mit einer elektrisch ansteuerbaren Reduktionsmittelpumpe 11 zum Fördern des Reduktionsmittels zugeordnet ist.

Als Reduktionsmittel dient in diesem Ausführungsbeispiel wässerige Harnstofflösung, die in dem Reduktionsmittelvorratsbehälter 10 gespeichert ist. Dieser weist eine elektrische Heizeinrichtung 12 und Sensoren 13,14 auf, welche die Temperatur der Harnstofflösung bzw. den Füllstand im Reduktionsmittelvorratsbehälter 10 erfassen. An das Dosiersteuergerät 9 werden außerdem noch die Signale eines stromaufwärts des Reduktionskatalysators 8 angeordneten Temperatursensors und eines stromabwärts des Reduktionskatalysators 8 angeordneten Abgasmessaufnehmers, z.B. eines NOx-Sensors übergeben (nicht dargestellt).

Das Dosiersteuergerät 9 steuert ein elektromagnetisches Dosierventil 15 an, dem bedarfsgerecht über eine Zuführungsleitung 16 Harnstofflösung mit Hilfe der Reduktionsmittelpumpe 11 aus dem Reduktionsmittelvorratsbehälter 10 zugeführt wird. In die Zuführungsleitung 16 ist ein Drucksensor 18 eingefügt, der den Druck im Dosiersystem erfasst und ein entsprechendes Signal an das Dosiersteuergerät 9 abgibt. Die Einspritzung der Harnstofflösung mittels des Dosierventiles 15 erfolgt in die Abgasleitung 4 stromaufwärts des Reduktionskatalysators 8.

Im Betrieb der Brennkraftmaschine 1 strömt das Abgas in der eingezeichneten Pfeilrichtung durch die Abgasleitung 4.

Das Dosiersteuergerät 9 ist zum gegenseitigen Datentransfer über ein elektrisches Bussystem 17 mit dem Motorsteuergerät 6 verbunden. Über das Bussystem 17 werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 9 übergeben.

Ausgehend von diesen Parametern und den Messwerten für die Abgastemperatur und dem NOx-Gehalt berechnet das Dosiersteuergerät 9 die einzuspritzende Menge an Harnstofflösung und gibt über eine nicht näher bezeichnete elektrische Verbindungsleitung ein entsprechendes elektrisches Signal an das Dosierventil 15 ab. Durch die Einspritzung in die Abgasleitung 4 wird der Harnstoff hydrolysiert und durchmischt. In den Katalysatoreinheiten erfolgt die katalytische Reduktion des NOx im Abgas zu N₂ und H₂O.

Das Dosierventil 15 zum Einbringen der Harnstofflösung in die Abgasleitung 4 entspricht weitgehend einem üblichen Niederdruck-Benzineinspritzventil, das z.B. in eine mit Wandung der Abgasleitung 4 fest verbundenen Ventilaufnahmevorrichtung lösbar befestigt ist.

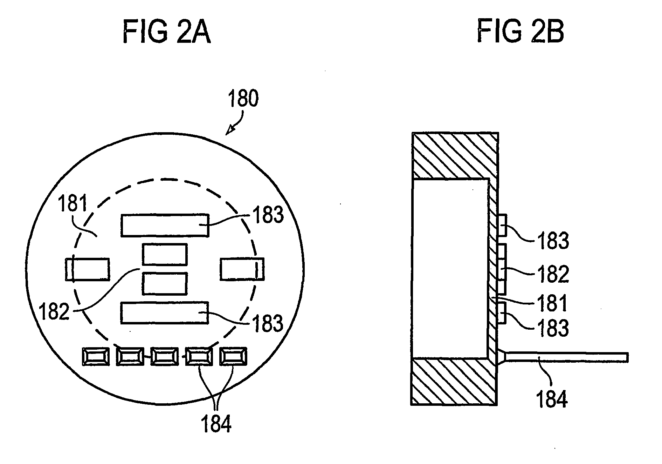

In Figur 2A ist eine typische Keramikdrucksensormembran 181 kreisförmigen Querschnittes des Drucksensors 18 von der dem unter Druck stehendem Medium (Reduktionsmittel) abgewandten Seite dargestellt. Figur 2B zeigt diese Keramikdrucksensormembran 181 im Schnitt. Für Druckmessungen in wässeriger Harnstofflösung sind wegen der chemischen Beständigkeit Sensorelemente aus Al₂O₃-Keramik besonders geeignet. Diese Sensorelemente bestehen aus einem topfförmigen Keramikteil mit integrierter Sensormembran 181. Auf der Sensormembran 181 ist ein Widerstandsnetzwerk 182 in Dickschichttechnologie aufgebracht, welches die Sensor- und Kalibrierwiderstände enthält. Das Messprinzip basiert auf dem Effekt der Widerstandsänderung bei mechanischer Verspannung der Sensormembran (Piezoresistivität). Zur Kompensation von Temperaturabhängigkeiten können zusätzliche temperaturabhängige Widerstände vorgesehen sein.

Zur Heizung der Drucksensormembran 181 sind mit der gleichen Technologie zusätzliche elektrische Widerstände 183 aufgebracht. Auf der Drucksensormembran 181 sind genügend freie Flächen verfügbar, um diese elektrischen Heizwiderstände 183 mit geeigneter Geometrie und Leistung aufzubringen. Bei Anwendungen mit geringem Bedarf an Heizleistung (kleiner 1 Watt) kann auch direkt durch Anlegen der Bordnetzspannung (ca. 14 Volt) anstelle der Referenzspannung von üblicherweise 5 Volt direkt am Sensorwiderstand geheizt werden.

Die Drucksensormembran 181 bietet ideale Voraussetzungen für diese Art der elektrischen Heizung, da Al₂O₃-Keramik eine hohe Wärmeleitfähigkeit besitzt und zudem die Sensormembran 181 prinzipbedingt sehr dünn ist. Die Sensormembran 181 stellt somit die optimale elektrische Isolierung der elektrischen Heizung von der beheizten wässerigen Harnstofflösung dar.

Die elektrischen Heizwiderstände 183 und das Sensorwiderstandsnetzwerk 182 werden über Anschlußpins und Anschlußleitungen 184 mit einer Auswerteelektronik bzw. Heizungsansteuerung, die vorzugsweise in dem Dosiersteuergerät 9 integriert ist, verbunden. Das Sensorelement kann auch mittels Bonddrähten oder durch direktes Einlöten mit dem Dosiersteuergerät 9 verbunden sein.

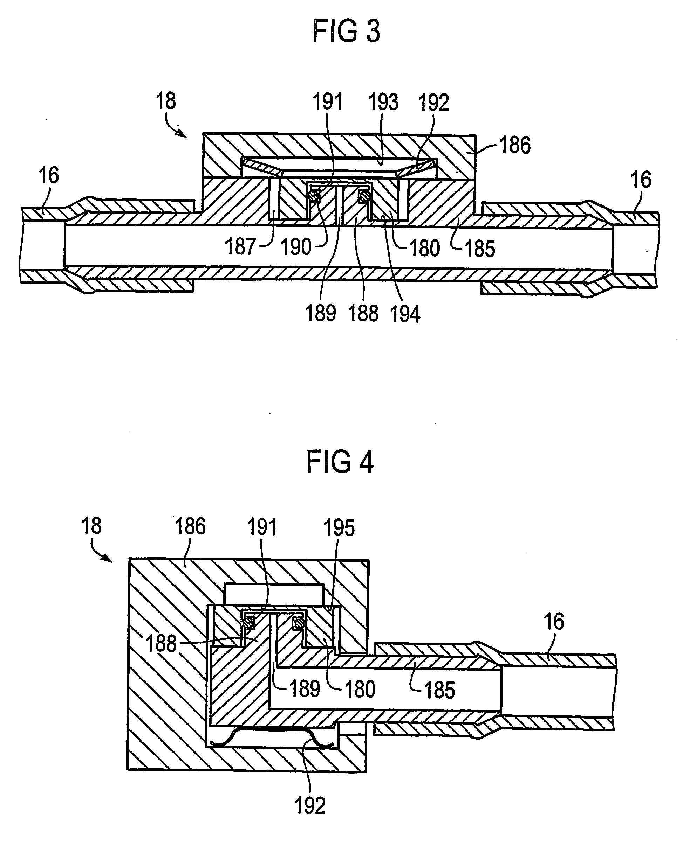

In Fig. 3 ist ein erstes Ausführungsbeispiel eines erfindungsgemäßen Drucksensors 18 gezeigt, wobei das Drucksensorelement 180 in einem zweiteiligen Aufnahmeteil 185, 186 eingebaut ist und dieses in der als elastischer Schlauch ausgeführten Zuführungsleitung 16 eingefügt ist. Das Aufnahmeteil ist dabei als T-Stück für die Zuführungsleitung 16 ausgebildet, wobei in einem Unterteil 185 des Aufnahmeteils nicht näher bezeichnete Anschlussstücke für die Zuführungsleitung 16 angeformt sind. Das Unterteil 185 weist ferner eine zylindrische Aussparung 187 auf, in dessen Mitte ein ebenfalls zylindrischer Kern 188 ausgebildet ist. Die Durchmesser der Aussparung 187 und des Kernes 188 sind der Geometrie des topfförmigen Drucksensorelementes 180 angepasst, so dass dieses in die Aussparung 187 eingelegt werden kann. Die Aussparung 187 ist dabei so gestaltet, dass das Drucksensorelement 180 so nahe wie es dessen Form zulässt, an der als elastischen Reduktionsmittelschlauch ausgebildeten Zuführungsleitung 16 sitzt. Der Kern 188 weist einen zentralen Kanal 189 mit einem, gegenüber dem Durchmesser der Zuführungsleitung 16 wesentlichen geringerem Querschnitt auf. Durch eine solche Anordnung wird sichergestellt, dass das Totvolumen an Reduktionsmittellösung vor der Drucksensormembran 181 möglichst gering ist. Im einfachsten Fall kann der Kanal 189 durch eine Bohrung realisiert werden.

Der Kern 188 weist eine radiale Nut 190 zur Aufnahme eines Radialdichtelementes 191 auf. Vorzugsweise wird als Radialdichtelement 191 ein O-Ring verwendet. Das Radialdichtelement 191 dichtet das Drucksensorelement 180 an dem Kern 188 ab, so dass Reduktionsmittellösung nur auf die Drucksensormembran 181 einwirken kann.

Um das Drucksensorelement 180, insbesondere die Drucksensormembran 181 vor mechanischer bzw. hydraulischer Überlastung zu schützen, wird das Drucksensorelement 180 nicht starr in das Aufnahmeteil 185, 186 eingebaut, sondern über wenigstens ein Federelement 192 gegen eine Auflage 193 gedrückt. Die Federvorspannung ist so gewählt, dass im gesamten zulässigen Arbeitsdruckbereich das Drucksensorelementes 180 in der durch die Auflage 193 definierten Position bleibt. Überschreitet aber die Kraft auf die Drucksensormembran 180 beim Einfrieren der Reduktionsmittellösung den über die Vorspannung des Federelements vorgegebenen Maximalwert, kann das Drucksensorelement 180 gegen die Federkraft ausweichen und durch die sich ergebende Volumenzunahme im Raum vor der Drucksensormembran 181 wird der Druck begrenzt. Durch die im Ausführungsbeispiel gezeigte Gestaltung des Aufnahmeteils 185, 186 wird ein möglichst kleines Totvolumen unmittelbar vor der Drucksensormembran 181 erreicht und somit kann durch eine kleine Auslenkung des Drucksensorelements 180 eine ausreichende Volumenzunahme sichergestellt werden. Die Abdichtung des Drucksensorelements 180 mittels des Radialdichtelementes 191 gewährleistet, dass diese Auslenkung keine Undichtigkeit verursacht.

Beim langsamen Einfrieren kann solange ein Druckausgleich in Richtung Zuführungsleitung 16 erfolgen, bis die Reduktionsmittellösung in dem Kanal 189 einzufrieren beginnt. Spätestens dann würde wegen der Volumenzunahme des Reduktionsmittels beim Phasenübergang flüssig - fest bei einer starren Lagerung des Drucksensorelementes 180 in dem Aufnahmeteil 185,186 der Druck am Drucksensorelement 180 den Berstdruck übersteigen und somit die Drucksensormembran 181 zerstören.

Mit Hilfe des Federelementes 192 wird erreicht , dass trotz Volumenzunahme der Reduktionsmittellösung im Totvolumen, also im Kanal 189 und in dem Spalt zwischen Kern und Drucksensormembran, keine unzulässige Druckerhöhung auftritt.

Als Federelement 192 kann in bevorzugter Weise, wie in Figur 3 gezeigt, eine Tellerfeder verwendet werden. Es können aber auch andere Federelemente wie beispielsweise gewölbte oder gewellte Federscheiben, Schraubenfedern, sowohl mit Kreisquerschnitt, als auch mit Rechteckquerschnitt, Kegelstumpffedern, Pufferfedern, Spiralfedern, Rohrfedern, gegebenenfalls mit geeigneten Adaptern eingesetzt werden. Darüber hinaus können auch mehrere Federelemente eingesetzt werden. Es muss lediglich sichergestellt sein, dass die elektrische Kontaktierung der Drucksensormembran 181 zu einer Auswerteschaltung des Drucksignals durch eine solche Federelementanordnung nicht beeinträchtigt wird. Die Auswerteschaltung ist vorzugsweise in eine Aussparung in dem Oberteil 186 des Aufnahmeteils angeordnet (nicht gezeigt).

Die Vorspannkraft des Federelementes 192 wird so gewählt, dass das Drucksensorelement 180 gegen die Federkraft von der vom Boden der Aussparung 187 im Unterteil 185 des Aufnahmeteils gebildeten Auflagefläche 194 abhebt, bevor der Berstdruck des Drucksensorelements 180 erreicht wird. Dadurch wird die Volumenvergrößerung erzielt und der Druck auf einen Wert begrenzt, der durch das Verhältnis Federkraft/Druckmembranfläche bestimmt ist.

Durch die Anordnung eines Radialdichtelementes 191 wird erreicht, dass trotz der Bewegung des Drucksensorelementes 180 in dem Aufnahmeteil 185, 186 die Dichtigkeit erhalten bleibt, und das eingeschlossene Reduktionsmittellösungsvolumen minimiert werden kann.

Die Abdichtung des Drucksensorelementes 181 kann anstelle des Radialdichtelementes 191 auch durch eine an dem Drucksensorelement 181 selbst oder an der Außenseite des Kernes 188 angeformte Dichtung oder, da nur eine sehr kleine Auslenkung des Drucksensorelementes 180 (typischerweise einige 1/10 mm) erfolgt, durch eine elastische Verklebung erfolgen.

Anstelle eines konkreten Federelementes 192 als zusätzliche Komponente des Drucksensors 18 ist es auch möglich, die Auslenkung des Drucksensorelementes 180 durch in gewissem Maße flexible Ausbildung von Gehäusewandungen des Aufnahmeteils, insbesondere des Oberteils 186 zu erreichen.

In Figur 4 ist ein weiteres Ausführungsbeispiel für eine bewegliche Lagerung des Drucksensorelemtes 180 innerhalb eines Aufnahmeteiles gezeigt, wobei gleiche oder zumindest gleich wirkende Teile mit gleichen Bezugszeichen versehen sind.

Im Unterschied zu der anhand der Figur 3 beschriebenen Ausführungsform wird hier das Drucksensorelement 180 mittels des Federelementes 192 gegen eine starre Auflagefläche 195 an dem Aufnahmeteil 186 gedrückt. Die Abdichtung erfolgt analog wie bereits beschrieben mittels eines Radialdichtelementes 191 an dem Kern 188 oder durch Verklebung. Das Unterteil 185 des Aufnahmeteils, an dem die Zuführungsleitung 16 angeschlossen ist, dient als Druckzuführung und wird von dem Federelement 192 gegen das Drucksensorelement 180 gedrückt. Bei Überdruck aufgrund Einfrieren der Reduktionsmittellösung in dem Kanal 189 weicht in dieser Ausführungsform nicht das Drucksensorelement 180 aus, sondern die Druckzuführung, d.h. das Unterteil 185 des Aufnahmeteils.

## Patentansprüche

1. Drucksensor (18) zum Erfassen des Druckes einer Flüssigkeit, insbesondere einer Reduktionsmittellösung für die Abgasnachbehandlung bei einer Brennkraftmaschine (1),
- mit einem eine Drucksensormembran (181) aufweisenden, topfförmigen Drucksensorelement (180),
- mit einem Aufnahmeteil (185,186) zur Aufnahme des Drucksensorelementes (180), das einen zylindrischen Kern (188) aufweist, der vom topfförmigen Drucksensorelement (180) umschlossen ist, wobei der Kern (188) einen zentralen Kanal (189) aufweist, und
- wenigstens einem Federelement (192) ,
-- mit dessen Hilfe das Drucksensorelement (180) innerhalb eines zulässigen Arbeitsdruckbereiches des Drucksensorelementes (180) dieses in einer definierten Position in dem Aufnahmeteil (185,186) gehalten wird und das
-- bei Überschreiten des zulässigen Arbeitsdruckbereiches des Drucksensorelementes (180) den Druck auf die Drucksensormembran (181) begrenzt und wobei
-- die Drucksensormembran (181) unmittelbar von der zu messenden Flüssigkeit benetzbar ist.

2. Vorrichtung nach Anspruch 1, **dadurch gekennzeichnet, dass** bei Überschreiten des zulässigen Arbeitsdruckbereiches das Drucksensorelement (180) entgegen der Federkraft des Federelementes (192) in dem Aufnahmeteil (185, 186) ausgelenkt wird, so dass das durch Volumenzunahme des vor der Drucksensormembran (181) liegenden Raumes der Druck auf die Drucksensormembran (181) begrenzt wird.

3. Vorrichtung nach Anspruch 1 oder 2, **dadurch gekennzeichnet, dass** das wenigstens eine Federelement (192) als Tellerfeder, gewölbte oder gewellte Federscheibe, Schraubenfeder, Kegelstumpffeder, Pufferfeder, Spiralfeder oder als Rohrfeder ausgebildet ist.

4. Vorrichtung nach Anspruch 3, **dadurch gekennzeichnet, dass** das Federelement (192) zwischen einer, die Drucksensormembran (181) tragenden Oberfläche des Drucksensorelementes (180) und einer der Drucksensormembran (181) zugewandten Auflage (193) in dem Aufnahmeteil (186) angeordnet ist.

5. Vorrichtung nach Anspruch 3, **dadurch gekennzeichnet, dass** das Drucksensorelement (180) ortsfest in einem Oberteil (186) des Aufnahmeteils angeordnet ist und das Federelement (192) zwischen diesem Oberteil (186) und einem, als Druckzuführung dienenden, mit der Zuführungsleitung (16) verbundenen Unterteil (185) angeordnet ist.

6. Vorrichtung nach Anspruch 1 oder 2, **dadurch gekennzeichnet, dass** das Federelement (192) als eine reversibel verformbare Gehäusewandung des Aufnahmeteils (185, 186) ausgebildet ist.

7. Vorrichtung nach einem der vorhergehenden Ansprüche, **dadurch gekennzeichnet, dass** zur Abdichtung zwischen dem Drucksensorelement (180) und dem Unterteil (185) des Aufnahmeteils ein Radialdichtelement (191) vorgesehen ist.

8. Vorrichtung nach Anspruch 7, **dadurch gekennzeichnet, dass** als Radialdichtelement (191) eine O-Ring-Dichtung vorgesehen ist, die in einer Nut (190) an einem sich vom Unterteil (185) des Aufnahmeteils in Richtung Drucksensormembran (181) erstreckenden Kern (188) eingelassen ist.

9. Vorrichtung nach Anspruch 7, **dadurch gekennzeichnet, dass** als Radialdichtelement (191) eine an das Drucksensorelement (180) oder an einem sich vom Unterteil (185) des Aufnahmeteils in Richtung Drucksensormembran (181) erstreckenden Kern (188) angeformte Dichtung vorgesehen ist.

10. Vorrichtung nach Anspruch 7, **dadurch gekennzeichnet, dass** die Abdichtung zwischen Drucksensorelement (180) und dem Unterteil (185) des Aufnahmeteils durch eine elastische Verklebung realisiert ist.

## Claims

1. Pressure sensor (18) for detecting the pressure of a liquid, in particular a reducing agent for the subsequent treatment of exhaust emissions in an internal combustion engine (1),
- with a pot-shaped pressure sensor element (180), having a pressure sensor membrane (181),
- with a receiving part (185, 186) to accommodate the pressure sensor element (180), having a cylindrical core (188), which is encased by the pot-shaped pressure sensor element (180), whereas the core (188) has a centrical channel (189), and
- at least one spring element (192),
-- with the assistance of which the pressure sensor element (180) is kept within a permissible working pressure range of the pressure sensor element (180) in a defined position in the receiving part (185, 186) and which
-- limits the pressure on the pressure sensor membrane (181) in case the permissible working pressure range of the pressure sensor element (180) is exceeded and whereby
-- the pressure sensor membrane (181) is directly wettable with the liquid to be measured.

2. Device according to claim 1, **characterized by** a deflection of the pressure sensor element (180) opposite to the spring load of the spring element (192) in the receiving part (185,186), when the permissible working pressure range is exceeded, so that by increasing the volume of the space in front of the pressure sensor membrane (181), the pressure on the pressure sensor membrane (181) is limited.

3. Device according to claim 1 or 2, **characterized in that** at least one spring element (192) is developed as a disk spring, a curved or corrugated spring washer, a coil spring, a conical spring, a buffer spring, a spiral spring or a bourdon tube.

4. Device according to claim 3, **characterized in that** the spring element (192) is placed in the receiving part (186) between a surface area of the pressure sensor element (180), which supports the pressure sensor membrane (181), and a support (193) facing the pressure sensor membrane (181).

5. Device according to claim 3, **characterized in that** the pressure sensor element (180) is placed in a fixed location in an upper component (186) of the receiving part, and that the spring element (192) is placed between this upper component (186) and a lower component (185) serving as a pressure feed, which is connected through the feeder line (16).

6. Device according to claim 1 or 2, **characterized in that** the spring element (192) is developed as a reversibly deformable housing wall of the receiving part (185, 186).

7. Device according to one of the previous claims, **characterized in that** a radial seal (191) is intended in order to seal the pressure sensor element (180) from the lower component (185) of the receiving part.

8. Device according to claim 7, **characterized in that** as a radial seal (191) an O-ring gasket is intended, which is embedded in a groove (190) inside a core (188) running from the lower component (185) of the receiving part towards the pressure sensor membrane (181).

9. Device according to claim 7, **characterized in that** as a radial seal (191) a gasket is intended, which is molded to the pressure sensor element (180), or to a core (188) running from the lower component (185) of the receiving part towards the pressure sensor membrane (181).

10. Device according to claim 7, **characterized in that** the seal between the pressure sensor element (180) and the lower component (185) of the receiving part has been realized with an elastic bonding.

## Revendications

1. Capteur de pression (18) pour détecter la pression d'un liquide, en particulier d'une solution d'agent réducteur pour le post-traitement des gaz d'échappement dans un moteur à combustion (1),
- comprenant un élément capteur de pression (180) en forme de godet comportant une membrane de capteur (181),
- comprenant une partie de réception (185, 186) pour la réception de l'élément capteur de pression (180), laquelle comprend un noyau cylindrique (188) qui est enfermé par l'élément capteur de pression (180) en forme de godet, ledit noyau (188) comprenant un canal central (189), et
- comprenant au moins un élément à ressort (192),
-- à l'aide duquel l'élément capteur de pression (180) est maintenu à l'intérieur d'une plage de pression de travail admissible de l'élément capteurs de pression (180) dans une position définie dans la partie de réception (185, 186), et
-- qui limite la pression sur la membrane de capteur (181) en cas de dépassement de la plage de pression de travail admissible de l'élément capteur de pression (180), et
-- la membrane de capteur (181) est susceptible d'être mouillée directement par le liquide qu'il s'agit de mesurer.

2. Dispositif selon la revendication 1, **caractérisé en ce que** lors d'un dépassement de la plage de pression de travail admissible, l'élément capteur de pression (180) est défléchi à l'encontre de la force de l'élément à ressort (192) dans la partie de réception (185, 186), de sorte que la pression sur la membrane de capteur (181) est limitée par augmentation de volume de l'espace qui se présente devant la membrane de capteur (181).

3. Dispositif selon la revendication 1 ou 2, **caractérisé en ce que** ledit au moins un élément à ressort (192) est réalisé sous forme de rondelle Belleville, de plaque-ressort bombée ou ondulée, de ressort hélicoïdal, de ressort en tronc de cône, de ressort tampon, de ressort spiralé ou encore de ressort tubulaire.

4. Dispositif selon la revendication 3, **caractérisé en ce que** l'élément à ressort (192) est agencé dans la partie de réception (186) entre une surface, qui porte la membrane de capteur (181), de l'élément capteur de pression (180) et un appui (193) tourné vers la membrane de capteur (181).

5. Dispositif selon la revendication 3, **caractérisé en ce que** l'élément capteur de pression (180) est agencé stationnaire dans une partie supérieure (186) de la partie de réception, et **en ce que** l'élément à ressort (192) est agencé entre cette partie supérieure (186) et une partie inférieure (185) reliée à la conduite d'amenée (16) et servant à l'amenée de pression.

6. Dispositif selon la revendication 1 ou 2, **caractérisé en ce que** l'élément à ressort (192) est réalisé sous forme d'une paroi, déformable de manière réversible, du boîtier de la partie de réception (185, 186).

7. Dispositif selon l'une des revendications précédentes, **caractérisé en ce qu'**il est prévu un élément d'étanchement radial (191) pour l'étanchement entre l'élément capteur de pression (180) et la partie inférieure (185) de la partie de réception.

8. Dispositif selon la revendication 7, **caractérisé en ce qu'**il est prévu un étanchement à joint torique à titre d'élément d'étanchement radial (191), lequel est mis en place dans une gorge (190) sur un noyau (188) qui s'étend depuis la partie inférieure (185) de la partie de réception en direction de la membrane de capteur (181).

9. Dispositif selon la revendication 7, **caractérisé en ce qu'**il est prévu à titre d'élément d'étanchement radial (191) un joint d'étanchéité conformé sur l'élément capteur de pression (180) ou sur un noyau (188) qui s'étend depuis la partie inférieure (185) de la partie de réception en direction de la membrane de capteur (181).

10. Dispositif selon la revendication 7, **caractérisé en ce que** l'étanchement entre l'élément capteur de pression (180) et la partie inférieure (185) de la partie de réception est réalisé par un collage élastique.
